# EUROPEAN PATENT APPLICATION

(11) **EP 0 715 444 A2**
(43) Date of publication of application: **05.06.1996**
(21) Application number: 95112099.7
(22) Date of filing: 01.08.1995
(51) Int. Cl.: H04M 3/50, H04M 3/48

(54) **Telephone call-back application**

(30) Priority: 28.11.1994 US 345884
(71) Applicant: Siemens Rolm Communications Inc., Santa Clara, CA 95054 (US)
(72) Inventor: Locke, Michael E., Santa Clara, CA 95054 (US)
(74) Representative: Fuchs, Franz-Josef, Dr.-Ing.

(57) **Abstract**

Voice mail can be used to enable a telephone call-back arrangement for users remote to a switch. By storing pertinent user identification information in voice mail, the switch can call-back to the user and provide options and features, including billing, otherwise only available to subscribers who are local to the switch.

## Description

### Field of the Invention

This invention relates generally to telephone communications. Specifically, the invention relates to a method for automatically calling back subscribers.

### Background of the Invention

Travelling business people have a continual need for reliable, low cost telephone communications. Depending on the location at which service is requested, it may be difficult to provide the desired level of service in a rapid and low cost manner, despite the constant upgrading of telephone systems throughout the world. In addition to unevenness in service, the use of multiple services will result in a patchwork of billing and accounting, and the need to provide payment to several service vendors.

It would be preferable therefore to provide a controlled system through which users can direct and place telephone calls. Ideally, all billing would be handled by one central source.

### Summary of the Invention

These and other objects are achieved by a telephone call-back system and method of offering access to a system of telephone lines through one or more switches. The user remotely accesses a location in a voice store and forward system ("voice mail"), depositing a user identification number. If available, the system would use caller identification (caller I.D.) to determine the location of the user, or the user would enter his or her location in addition to an identification number.

The system would then call the user back and provide access to voice mail or an open line or, if a specific destination number was requested, the system would then proceed to dial the number and connect the parties.

A variation of the foregoing uses local nodes for collecting user instructions. For example, nodes could be placed within the vicinity of the same central office as the user. User information received at the node would be transferred back to the central system over a separate digital network or through the telephone network as a result of a node-originated transmission or polling by the centralized system.

All of these methods will result in significant savings by providing uniform, controllable telephone service and centralizing the billing function at the switch.

### Brief Description of the Drawings

A more complete understanding of the present invention, as well as other objects and advantages thereof not enumerated herein, will become apparent upon consideration of the following detailed description and the accompanying drawings, wherein:
Figure 1 is a schematic block diagram of a telephone call-back system;
Figure 2 is a flow chart of the operation of the telephone call-back system;
Figure 3 is a schematic block diagram of a telephone call-back system employing local nodes for collecting user requests; and
Figure 4 is a flow chart of the operation of the telephone call-back system employing local nodes for collecting user requests.

### Detailed Description of the Invention

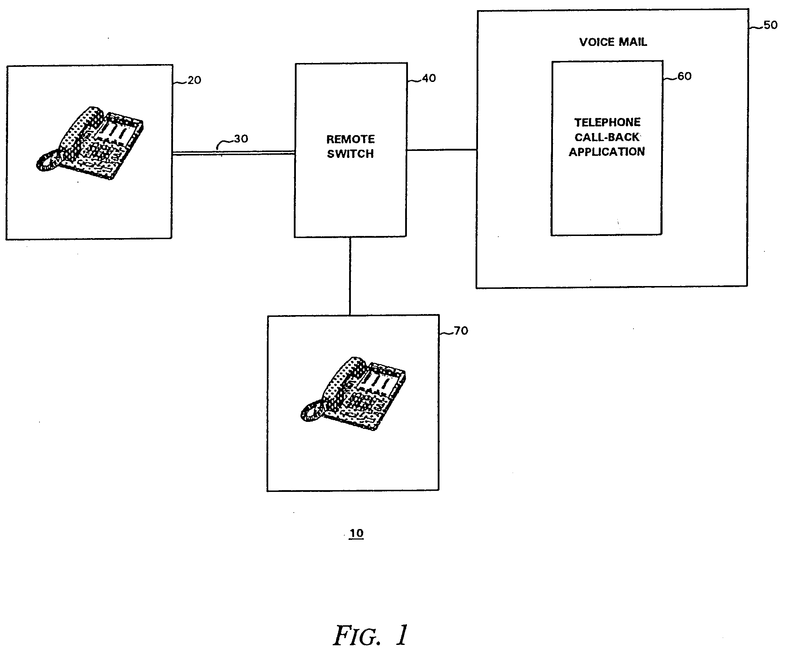

A system 10 for performing the outcalling function is shown in Figure 1. A remotely-located user instrument 20 is connected to the public switched telephone network (PSTN or network) 30. A remote switch 40, responsible for handling the interconnecting functions, interconnects to the network 30. Intermediate central offices, switching centers, and other apparatus are omitted for clarity.

The switch 40 is provided with a voice mail module 50. A telephone call-back application module (TCBA) 60, shown in Figure 1 as an application internal to voice mail 50, is activated by data from the voice mail module 50 and in turn provides control signals to the switch 40. It should be understood that the TCBA could also be a free-standing application. A subscriber station 70 is shown connected to the switch 40. However, the station 70 may be local to the switch or it may be a station on the network 30.

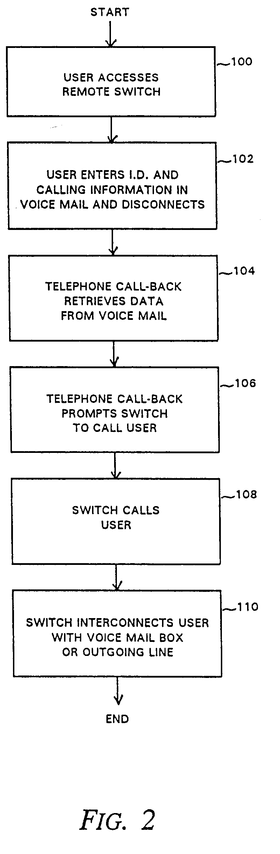

One scheme for using the system of Figure 1 is set out in the flow chart of Figure 2. Initially, the user 20 calls the switch 40 (100), accesses voice mail 50, leaving a message consisting of at least the user's identification code and then disconnects (102). (The numbers in parentheses refer to the blocks in the flow chart.) If the switch 40 is to dial a specific number, then that number would also be left.

Using a scheduling function, the call-back may be delayed, taking place at a time selected by the user. Further, the call-back can be made to a different location, again at the option of the user. For example, if the user is in London on Monday, and plans to be in Tokyo on Wednesday, on Monday the user can request a call-back to Tokyo on Wednesday. Additionally, the system could be programmed to retry the call-back a number of times until the call-back is successfully completed.

If the switch 40 is equipped with the feature commonly known as caller I.D., the user's current telephone number (and hence location) could be entered automatically into voice mail 50. If this feature is not available, the user would need to provide this information in addition to the user identification. Also, the user could provide such additional items as room number when calling from a hotel.

Continuing with the call-back routine, the TCBA 60 retrieves the information from voice mail 50 (104) and prompts the switch 40 (106). The switch 40 then calls the user 20 (108), connecting the user to the user's voice mail box or an open line, or dials a number according to instructions left in voice mail 50 (110). In the case where the user is in a hotel, voice or tone prompts could be generated directing the hotel operator or other attendant to reconnect the user 20. The ultimate destination can be a subscriber 70 on the network 30 or one that is local to the switch 40.

If the user 20 is connected to its voice mail box, depending on the authorization granted, a full range of options can be made available, such as connection with other voice mail boxes, access to local subscribers, and access to outgoing trunk lines.

In addition to providing the ability to make calls through the switch 40, the user 20 could also be permitted to access any of the regular features available at the switch 40, such as transfers to other units connected to the switch 40, transfers to other switches, conferencing, and route optimization. Also, the system could employ a network of switches, selectively engaging one or another for the call-back function.

User information could be conveyed in a number of forms. For example, the information could be encoded using dual-tone multifrequency signals (DTMF). Where ISDN service (integrated services digital network) is available, the information could be conveyed using D-channel signalling.

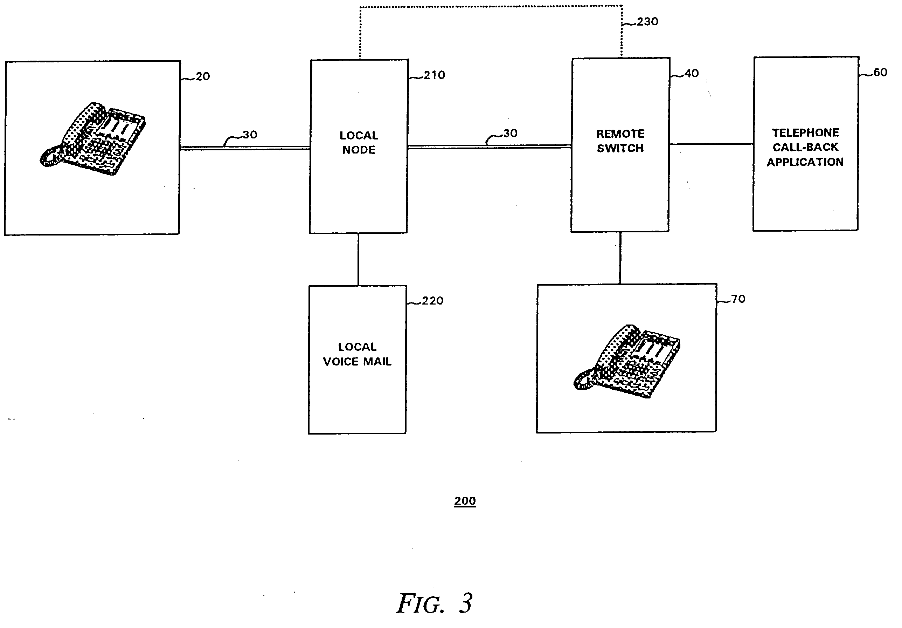

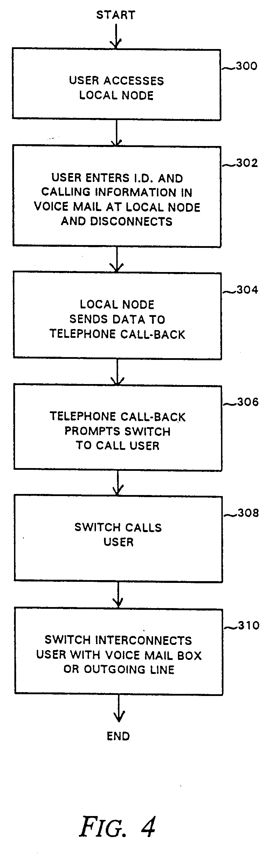

In some cases, it may be advantageous to provide a local voice mail for receiving user information. One such arrangement 200 is shown in Figure 3. Instead of directly accessing the switch 40, the user leaves the appropriate information in local voice mail 220 resident at a local node 210. The information in local voice mail 220 can be retrieved and sent back to the TCBA 60 either over the PSTN 30 or over a separate digital pathway or network 230. One possible sequence of operation for this arrangement is shown in the flow chart of Figure 4. This system 200 functions the same as the arrangement in Figure 1 except as indicated in steps 300, 302, and 304.

In either case (Figure 1 or 3), the system can use the user's identification for billing purposes. Generally, the switch would have the number called, the time and duration of the call, and the charges. By adding user identification, the charges can be properly allocated. If desired, the original user access call could be accomplished over a toll-fee ("800") line.

A conferencing apparatus and method are discussed in co-pending U.S. Patent Application, serial no. 08/037,195, for an Enhanced Telephone Conference Equipment, by the inventor herein, filed March 26, 1993 and assigned to the same assignee, the details of which are incorporated herein by reference. As an alternative to the connections described above, the remote user could be connected as the controlling user of the conference bridge. Upon call-back, the remote user would conduct a telephone conference, using in-channel signalling such as DTMF (or another signalling scheme as applicable) to maintain control over the progress of the telephone conference, as more fully described in that application. With the configuration described there, only the remote user has control, as DTMF tones from other conference participants would be blocked from reaching the conference bridge controller.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

## Claims

1. An apparatus for providing a user on a telephone network with access to a remote switch, comprising:
means for storing user identification information;
means for receiving a request from the user for access to the remote switch;
means for calling back the user; and
means for connecting the user with the remote switch.

2. An apparatus as set forth in claim 1, wherein the means for receiving a request includes means for prompting the user.

3. An apparatus as set forth in claim 1, wherein the means for receiving a request includes means for accepting DTMF tones.

4. An apparatus as set forth in claim 1, wherein the means for receiving a request includes means for accepting D-channel signalling.

5. An apparatus as set forth in claim 1, wherein the means for receiving a request includes means for accepting the network location of the user.

6. An apparatus as set forth in claim 5, wherein the means for accepting the network location of the user includes means for automatically identifying the network location of the user.

7. An apparatus as set forth in claim 5, wherein the means for accepting the network location of the user includes means for accepting the location from the user.

8. An apparatus as set forth in claim 1, wherein the means for receiving a request includes means for receiving a request from the user for the placement of a telephone call to a subscriber on the network.

9. An apparatus as set forth in claim 1, wherein the means for calling back the user includes means for prompting the user.

10. An apparatus as set forth in claim 1, wherein the means for calling back the user includes means for prompting an intermediate attendant.

11. An apparatus as set forth in claim 1, wherein the means for receiving a request is at a location remote from the switch.

12. An apparatus as set forth in claim 11, wherein the means for receiving a request is at a location local with respect to the caller.

13. An apparatus as set forth in claim 1, wherein the means for connecting the user with the remote switch includes means for connecting the user to voice mail.

14. An apparatus as set forth in claim 1, further including means for connecting the user to a subscriber on the network.

15. An apparatus as set forth in claim 1, further including means for connecting the user to a local subscriber.

16. An apparatus as set forth in claim 1, further including means for connecting the user to an outgoing line.

17. An apparatus as set forth in claim 1, wherein the means for connecting the user with the remote switch includes means for connecting the user to a conference bridge responsive to in-channel control signals from the user.

18. An apparatus as set forth in claim 1, further including means for providing the user identification information to the switch for billing.

19. An apparatus as set forth in claim 1, further including means for selectively connecting the user with at least one additional switch located at a location different from that of the remote switch.

20. An apparatus for providing a user on a telephone network with access to a voice mail box through a remote switch, comprising:
a memory for storing user identification information;
voice mail for receiving a request from a user for access to the voice mail box; and
a telephone call-back application, responsive to the memory and voice mail, for prompting the switch to place a call-back to the user and connecting the user to the voice mail box.

21. A method for providing a user on a telephone network with access to a remote switch, comprising the steps of:
storing user identification information;
receiving a request from the user for access to the remote switch;
calling back the user; and
connecting the user with the remote switch.

22. A method as set forth in claim 21, wherein the step of receiving a request includes the step of prompting the user.

23. A method as set forth in claim 21, wherein the step of receiving a request includes the step of accepting DTMF tones.

24. A method as set forth in claim 21, wherein the step of receiving a request includes the step of accepting D-channel signalling.

25. A method as set forth in claim 21, wherein the step of receiving a request includes the step of accepting the network location of the user.

26. A method as set forth in claim 25, wherein the step of accepting the network location of the user includes the step of automatically identifying the network location of the user.

27. A method as set forth in claim 25, wherein the step of accepting the network location of the user includes the step of accepting the location from the user.

28. A method as set forth in claim 21, wherein the step of receiving a request includes the step of receiving a request from the user for the placement of a telephone call to a subscriber on the network.

29. A method as set forth in claim 21, wherein the step of calling back the user includes the step of prompting the user.

30. A method as set forth in claim 21, wherein the step of calling back the user includes the step of prompting an intermediate attendant.

31. A method as set forth in claim 21, wherein the step of receiving a request includes the step of receiving the request at a location remote from the switch.

32. A method as set forth in claim 31, wherein the step of receiving a request includes the step of receiving the request at a location local with respect to the caller.

33. A method as set forth in claim 21, wherein the step of connecting the user with the remote switch includes the step of connecting the user to voice mail.

34. A method as set forth in claim 21, further including the step of connecting the user to a subscriber on the network.

35. A method as set forth in claim 21, further including the step of connecting the user to a local subscriber.

36. A method as set forth in claim 21, further including the step of connecting the user to an outgoing line.

37. A method as set forth in claim 21, wherein the step of connecting the user with the remote switch includes the step of connecting the user to a conference bridge responsive to in-channel control signals from the user.

38. A method as set forth in claim 21, further including the step of providing the user identification information to the switch for billing.

39. A method as set forth in claim 21, further including the step of selectively connecting the user with at least one additional switch located at a location different from that of the remote switch.

40. A method for providing a user on a telephone network with access to a voice mail box through a remote switch, comprising the steps of:
storing user identification information in a memory;
receiving a request from the user for access to the voice mail box;
in response to the user information and the request, prompting the switch to place a call-back to the user;
calling back the user; and
connecting the user with the voice mail box.
